# EUROPÄISCHE PATENTSCHRIFT

(11) **EP 1 178 939 B1**
(45) Veröffentlichungstag und Bekanntmachung des Hinweises auf die Patenterteilung: **21.08.2002**
(21) Anmeldenummer: 00929233.5
(22) Anmeldetag: 17.03.2000
(51) Int. Cl.: B65G 21/06

(54) **BEFESTIGUNGSEINRICHTUNG FÜR EIN ZWISCHEN BENACHBARTEN TRÄGERN EINSETZBARES BAUTEIL**
FIXING DEVICE FOR A PART THAT CAN BE INSERTED BETWEEN TWO ADJACENT SUPPORTS
DISPOSITIF DE FIXATION DESTINE A UN COMPOSANT INSERABLE ENTRE DES SUPPORTS ADJACENTS

(30) Priorität: 21.05.1999 DE 19923347
(43) Veröffentlichungstag der Anmeldung: 13.02.2002
(73) Patentinhaber: Wittenstein AG, 97999 Igersheim (DE)
(72) Erfinder: HOFMANN, Werner, D-97980 Bad Mergentheim (DE); WILHELM, Thomas, D-97993 Creglingen (DE)
(74) Vertreter: Patentanwalts-Partnerschaft Rotermund + Pfusch
(86) Internationale Anmeldenummer: DE0000844
(87) Internationale Veröffentlichungsnummer: WO00071443

(56) Entgegenhaltungen:
- EP-A- 0 122 573
- FR-A- 1 488 034
- FR-A- 2 382 385
- US-A- 3 698 539
- US-A- 5 361 884

## Beschreibung

Die Erfindung betrifft eine Befestigungseinrichtung für ein zwischen benachbarten Trägern insbesondere mittig einsetzbares Bauteil.

Eine solche Einrichtung ist aus FR-A-2382385 bekannt.

Die gattungsmäßige Befestigungseinrichtung soll einfacher handhabbar sein und insbesondere eine mittige Ausrichtung des einzusetzenden Bauteiles zwischen den Trägern gewährleisten.

Einen solchen Zweck erfüllt eine gattungsgemäße Befestigungseinrichtung mit den kennzeichnenden Merkmalen des Patentanspruchs 1.

Zweckmäßige und vorteilhafte Ausgestaltungen sind Gegenstand der Unteransprüche.

Ein Ausführungsbeispiel ist in der Zeichnung dargestellt.

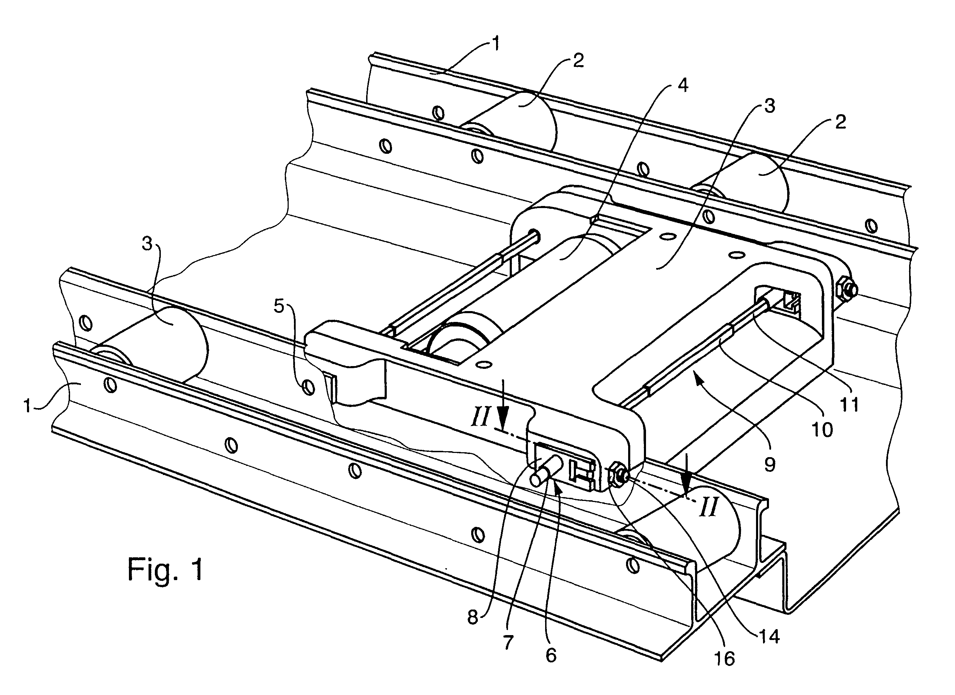

In dieser zeigen
- Fig. 1: eine perspektivische Ansicht einer Befestigungseinrichtung an einem zwischen zwei Träger eingesetzten Bauteil,

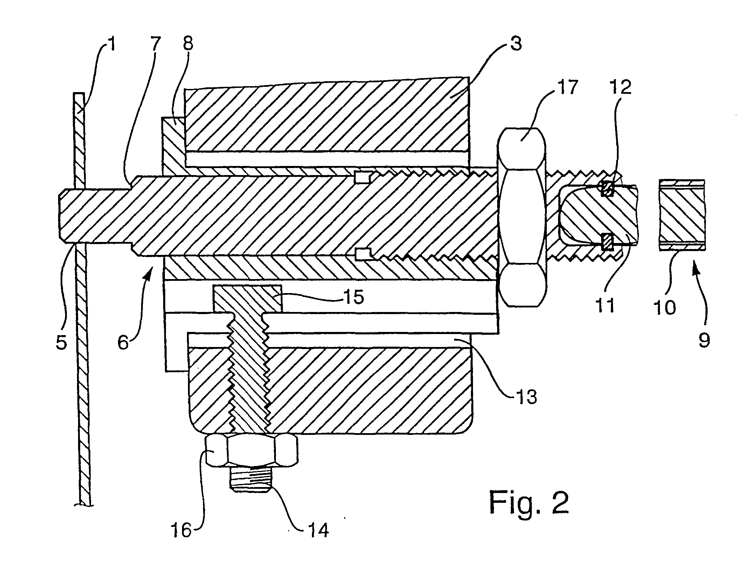

- Fig. 2: einen Schnitt durch einen in dem zu befestigenden Bauteil gelagerten Köpfen der Befestigungseinrichtung nach Linie IV-IV in Fig. 1 als Ausschnitt.

Ein Transportsystem mit einer Transportebene besteht aus ortsfest benachbart verlegten Trägern 1 mit in den Trägern frei drehbar gelagerten Transportrollen 2 und zwischen den Trägern 1 in einem als Antriebsgehäuse ausgebildeten Bauteil 3 antreibbar gelagerten Transportrollen 4. Die Transportrollen 2 und 4 bilden eine gemeinsame Transportebene, wobei die Lage der Transportrollen 4 in Richtung senkrecht zu der Transportebene verstellbar ist.

In dem Träger 1 befinden sich Bohrungen 5 zur Aufnahme des Bauteiles 3. Die Bohrungen 5 sollen mit Bezug auf den Bauraum, in dem das Bauteil 3 zu befestigen ist, gegeneinander fluchtend ausgerichtet sein.

Bei einem an den Trägern 1 befestigten Bauteil 3 greifen die Zapfen 6 des Bauteiles 3 in die Bohrungen 5 der Träger 1 ein.

Damit das Bauteil 3 zwischen den Trägern 1 und 2 ein- und ausgebaut werden kann, müssen die Zapfen 6 in der Achse fluchtend gegenüberliegender Bohrungen 5 verschiebbar sein. Des weiteren müssen die Zapfen 6 angrenzend an einen Endbereich, mit dem sie in die Bohrungen 5 der Träger 1 eingreifen sollen, einen Anschlag 7 besitzen, der beispielsweise als Ringbund ausgebildet sein kann.

Die Zapfen 6 sind in ihren jeweiligen Bereichen, die nicht in die Bohrungen 5 der Träger 1 eingreifen können, mit einem Außengewinde versehen. Mit diesem Außengewinde greifen die Zapfen 6 in ein in dem Bauteil 3 jeweils gelagertes Schiebeteil 8 ein, wobei diese Schiebeteile 8 jeweils mit einem Aufnahmegewinde versehen sind. Fluchtend gegenüberliegende Zapfen 6 sind jeweils mit gegensinnigen Gewinden gleicher Steigung versehen.

Mit Hilfe eines zwei fluchtend gegenüberliegende Zapfen jeweils kraftschlüssig ergreifenden Mitnehmers 9 können die Zapfen 6 gleichmäßig gegensinnig verdreht und damit in das Bauteil hinein oder aus diesem heraus bewegt werden.

Eine Mitnehmereinrichtung 9 kann beispielsweise bestehen aus einer zentral zwischen zwei miteinander zu verbindenden Zapfen 6 vorgesehenen Muffe und zwei jeweils in deren Enden eingreifende Profilstäbe 11, die mit ihrem jeweils von der Muffe 10 abgewandten Enden in Umfangsrichtung kraftschlüssig, beispielsweise durch einen Formschluß über Vielkantprofile, in Hohlräume der Zapfen 6 eingreifen. Der Kraftschluß kann jeweils durch komplementär ausgebildete Vielkantprofile der Muffe 10, der in diese und in die Hohlräume der Zapfen 6 eingreifenden Profilstäbe 11. Zur Vermeidung eines Herausgleitens aus dem Zapfen 6 können die Profilstäbe 11 in deren Hohlräumen durch Sicherungsringe 12 gesichert sein, die in gegenüberliegende Nuten innerhalb der Zapfen 6 und der Profilstäbe 11 eingespannt sind.

Da gegenüberliegende Bohrungen 5 der Träger 1 fluchtungsungenau angeordnet sein können, durch beispielsweise einen geringen gegenseitigen Versatz der Träger 1 in deren Längsrichtung, ist eine Anpassung der Lage der Zapfen 6 innerhalb des Bauteiles 3 an solche Ungenauigkeiten möglich. Hierzu lagern die Zapfen 6 in Schiebeteilen 8. Diese Schiebeteile 8 haben die Funktion eines Kulissensteines mit einer Führung in einer als Kulisse innerhalb des Bauteiles 3 fungierenden Verschiebe-Öffnung 13. Diese Verschiebeöffnung 13 ist derart gestaltet, daß das Schiebeteil 8 parallel zu der Transportebene in Längsrichtung der Träger 1 verschiebbar ist. Das Verschieben der Schiebeteile 8 bewirkt jeweils eine in einem Gewinde des Bauteiles 3 gelagerte Verstellschraube 14. An ihrem dem Schiebeteil 8 zugewandten Ende besitzt die Verstellschraube 14 einen Ringbund 15, mit dem sie in eine schwalbenschwanzartig ausgebildete Nut des Schiebeteiles 8 eingreift. In einer bestimmten Lage fixierbar ist die Verstellschraube 14 über eine gegen das Bauteil 3 anziehbar Kontermutter 16. Auch die Zapfen 7 sind in einer jeweils eingestellten Lage durch an diesen angreifende Kontermuttern 17 fixierbar wobei die Kontermutter 17 jeweils gegen das Schiebeteil 8 angezogen wird.

Durch den Mitnehmer 9 und die gegenläufigen Gewinde der Zapfen 7 ist eine Befestigung des Bauteiles 3 in einer mittigen Lage zwischen den Träger 1 auf einfache Weise möglich. Durch den Mitnehmer 9 werden die Zapfen 6 in die Bohrungen 5 der Träger 1 eingeführt und über die Anschläge 7 gegenüber diesen Träger 1 verspannt. In der Regel ist ein Bauteil jeweils über zwei jeweils als Paare angeordnete Zapfen 7 in dem Zwischenraum zwischen zwei benachbarten Träger 1 befestigt.

Die Mitnehmereinrichtung kann in beliebiger Weise ausgebildet sein, wobei es lediglich darauf ankommt, daß die zu einem Zapfen-Paar gehörenden gegenüberliegenden Zapfen 7 gleichmäßig verstellt werden. Dabei kann die Mitnehmereinrichtung beispielsweise auch dadurch ausgebildet sein, daß die in die Zapfen 6 eingreifenden Profilstäbe 11 längsverschieblich kraftschlüssig ineinandergreifen.

Damit nicht fluchtend ausgerichtete Zapfen 7 durch eine Mitnehmereinrichtung mit in die Zapfen eingreifenden Profilstäben betätigt werden können, muß an den zusammenwirkenden Vielkantflächen des Hohlraumes eines jeweiligen Zapfens 7 und des zugehörigen Profilstabes 11 eine Kippstellung möglich sein. Zu diesem Zweck kann der in dem Hohlraum der Zapfen 7 eingreifende Endbereich der Profilstäbe 11 kugelkopfartig ausgebildet sein. Prinzipiell muß eine Art kardanische Anlenkung zwischen den Zapfen 7 und den mit diesen zusammenwirkenden Teilen der Mitnehmereinrichtung gegeben sein.

Zur Montage der an dem Bauteil 3 vorgesehenen Teile der Befestigungseinrichtung können die Schiebeteile 8 in die zugehörigen Bauteilöffnungen, das heißt in die Verschiebeöffnungen 13, eingeschoben und danach durch die Verstellschrauben 14 ausgerichtet und fixiert werden.

## Patentansprüche

1. Befestigungseinrichtung für ein zwischen benachbarten Trägern insbesondere mittig einsetzbares Bauteil,
**gekennzeichnet durch die Merkmale,**
- in den benachbarten Trägern sind zueinander etwa fluchtend ausgerichtete Aufnahme-Bohrungen (5) für Haltemittel des Bauteiles (3) vorgesehen,
- die Haltemittel sind als in dem Bauteil gelagerte Zapfen (6) ausgebildet, die an ihrem jeweils einem Träger (1) zugewandten ersten Ende eine die Aufnahme-Bohrung (5) komplementäre Form aufweisen und mit einem Anschlag (7) für nur einen axial begrenzten Eingriff in die jeweilige Aufnahme-Bohrung (5) versehen sind,
- die Zapfen (6) sind an ihrem jeweils zweiten Ende mit einem Gewinde versehen, mit dem sie in jeweils ein Gegengewinde von in dem Bauteil (3) verschiebbaren Verschiebeteilen (8) eingreifen,
- die Schiebeteile (8) sind in einer **durch** die Längsachsen der Zapfen (6) aufgespannten Ebene verschieb- und arretierbar,
- das Bauteil (3) besitzt an gegenüberliegenden Außenflächen mindestens ein Paar zueinander **durch** das Bauteil (3) hin**durch** fluchtender Zapfen (6),
- die Gewinde der beiden Zapfen (6) eines Zapfen-Paares sind gegensinnig und mit gleicher Steigung ausgebildet,
- die beiden Zapfen (6) eines Zapfen-Paares lassen sich **durch** eine Mitnehmereinrichtung (9) schlupffrei gegeneinander verdrehen.

2. Befestigungseinrichtung nach Anspruch 1,
**dadurch gekennzeichnet,**
**daß** die Mitnehmereinrichtung (9) ein kraftschlüssig direkt oder indirekt an den Zapfen (6) jeweils angreifender, als Muffe (10) wirkender Hohlprofilstab ausgebildet ist.

3. Befestigungseinrichtung nach Anspruch 1 oder 2,
**dadurch gekennzeichnet,**
**daß** bei einem indirekten Angriff der Muffe (10) an den Zapfen (6) von diesen jeweils kraftschlüssig ein Profilstab (11) in die offenen Enden der Muffe eingreift.

4. Befestigungseinrichtung nach einem der vorhergehenden Ansprüche,
**dadurch gekennzeichnet,**
**daß** die kraftschlüssige Verbindung über jeweils komplementär ineinandergreifende Profilkant-Flächen erfolgt.

5. Befestigungseinrichtung nach einem der vorhergehenden Ansprüche,
**dadurch gekennzeichnet,**
**daß** die kraftschlüssige Verbindung zwischen den Zapfen (6) einen Fluchtungsausgleich erlaubt.

6. Befestigungseinrichtung nach einem der vorhergehenden Ansprüche,
**dadurch gekennzeichnet,**
**daß** zur Erzielung eine Fluchtungsausgleiches zwischen Zapfen (6) eines Zapfenpaares in dem jeweils kraftschlüssigen Anschlußbereich zwischen Profilstäben (11) und Zapfen (7) die in die Zapfen (7) eingreifenden Endbereich der Profilstäbe (11) als kugelförmige Vielkante ausgebildet sind.

7. Befestigungseinrichtung nach einem der vorhergehenden Ansprüche,
**dadurch gekennzeichnet,**
**daß** in Gewindebohrungen des Bauteiles (3) geführte Verstellschrauben (14) kraftschlüssig an den Schiebeteilen (8) angreift, um diese Verschieben zu können.

8. Befestigungseinrichtung nach einem der vorhergehenden Ansprüche,
**dadurch gekennzeichnet,**
**daß** an den Gewinden der Verstellschrauben (14) und/oder an dem Gewinde zumindest eines Zapfens (6) Kontermuttern (16) bzw. (17) zum sicheren Arretieren dieser Teile vorgesehen sind.

9. Befestigungseinrichtung nach einem der vorhergehenden Ansprüche,
**dadurch gekennzeichnet,**
**daß** die kraftschlüssige Verbindung zwischen einer Verstellschraube (14) und dem zugehörigen Schieberteil (8) durch eine schwalbenschwanzartige Nut- und Federverbindung realisiert ist, wobei die Feder für das Drehen innerhalb der Nut scheibenförmig ausgebildet ist.

10. Befestigungseinrichtung nach einem der vorhergehenden Ansprüche,
**dadurch gekennzeichnet,**
**daß** die Nut der Nut- und Federverbindung jeweils in dem Schieberteil (8) ausgebildet ist und parallel zur Fluchtungsachse der Zapfen (6) eines Zapfen-Paares verläuft.

11. Befestigungseinrichtung nach einem der vorhergehenden Ansprüche,
**dadurch gekennzeichnet,**
**daß** die mit den Zapfen (6) eines Zapfen-Paares zusammenwirkenden Profilstäbe (11) teleskopartig ineinandergreifen.

12. Befestigungseinrichtung nach einem der vorhergehenden Ansprüche,
**dadurch gekennzeichnet,**
**daß** die in die Zapfen (6) eingreifenden Profilstäbe (11) durch Sicherungsringe (12) in der jeweiligen Aufnahme-Hohlraum eines Zapfens (6) gegen Herausgleiten gesichert sind.

## Claims

1. A fixing device for a part that can be inserted between adjacent supports, especially at the center,
**characterized by the features**
- receptacle boreholes (5) in approximate alignment with one another for retaining means of the part (3) are provided in the adjacent supports,
- the retaining means are designed as journals (6) mounted in the part and having a shape complementary to the receptacle borehole (5) on its first end facing one support (1), and they are provided with a stop (7) for only axially limited engagement in the respective receptacle borehole (5),
- on their second end, the journals (6) are provided with a thread with which they engage in a mating thread on sliding parts (8) which are displaceable in the part (3),
- the sliding parts (8) are displaceable and lockable in a plane spanned by the longitudinal axes of the journals (6),
- the part (3) has at least one pair of journals (6) aligned with one another through the part (3),
- the thread on the two journals (6) of a pair of journals is designed to be opposing but with the same pitch,
- the two journals (6) of a pair of journals can be turned toward one another by means of an entraining device (9) without slippage.

2. A fixing device according to Claim 1,
**characterized in that**
the entraining device (9) is designed as a hollow sectional rod which functions as a bushing (10) and acts on the journals (6) directly or indirectly in a friction-locked manner.

3. A fixing device according to Claim 1 or 2,
**characterized in that**
in a direct engagement of the bushing (10) with the journals (6), a sectional rod (11) thereof engages in the open ends of the bushing in a friction-locked manner.

4. A fixing device according to one of the preceding claims,
**characterized in that**
the friction-locked connection is accomplished over complementary engaging profiled edge faces.

5. A fixing device according to one of the preceding claims,
**characterized in that**
the friction-locked connection between the journals (6) permits compensation of the alignment.

6. A fixing device according to one of the preceding claims,
**characterized in that**
to achieve a compensation of alignment between journals (6) of a pair of journals in the friction-locked connection area between sectional rods (11) and journals (7), the end area of the sectional rods (11) engaging in the journals (7) is designed as a spherical polygon.

7. A fixing device according to one of the preceding claims,
**characterized in that**
adjusting screws (14) inserted into threaded boreholes of the part (3) engage in a friction-locking manner on the sliding parts (8) to permit displacement thereof.

8. A fixing device according to one of the preceding claims,
**characterized in that**
locknuts (16) or (17) are provided on the threads of the adjusting screws (14) and/or on the thread of at least one journal (6) for secure locking of these parts.

9. A fixing device according to one of the preceding claims,
**characterized in that**
the friction-locked connection between an adjusting screw (14) and the respective sliding part (8) is implemented by a dovetailed tongue-and-groove joint, where the tongue is designed to be disk-shaped for turning it inside the groove.

10. A fixing device according to one of the preceding claims,
**characterized in that**
the groove of the tongue-and-groove joint is designed in the sliding part (8) and runs parallel to the axis of alignment of the journals (6) of a pair of journals.

11. A fixing device according to one of the preceding claims,
**characterized in that**
the sectional rods (11) that work together with the journals (6) of a pair of journals telescope into one another for engagement.

12. A fixing device according to one of the preceding claims,
**characterized in that**
the sectional rods (11) engaging in the journals (6) are secured to prevent them from slipping out by means of locking rings (12) in the respective receptacle hollow space in a journal (6).

## Revendications

1. Dispositif de fixation destiné à un composant insérable entre des supports adjacents, en particulier en position médiane,
**caractérisé par** les particularités suivantes,
- dans les supports adjacents sont prévus des alésages-logements (5) orientés sensiblement en alignement l'un par rapport à l'autre, destinés à des moyens de maintien du composant (3),
- les moyens de maintien sont conformés en tourillons (6) supportés dans le composant, qui à leur première extrémité respectivement orientée vers un support (1) présentent une forme complémentaire à l'alésage-logement (5) et sont prévus pour uniquement une prise limitée axialement dans l'alésage-logement (5) respectif,
- les tourillons (6) sont pourvus à leur seconde extrémité respective d'un filetage, par lequel ils viennent en prise respectivement dans un taraudage de coulisseaux (8) capables de translation dans le composant (3),
- les coulisseaux (8) sont capables de translation et peuvent être bloqués dans un plan décrit par les axes longitudinaux des tourillons (6),
- le composant (3) possède sur des surfaces extérieures en regard l'une de l'autre une paire de tourillons (6) en alignement l'un par rapport à l'autre à travers le composant (3),
- les filetages des deux tourillons (6) d'une paire de tourillons sont conformés en sens opposés et avec le même pas de vis,
- les deux tourillons (6) d'une paire de tourillons peuvent être tournés l'un en sens inverse de l'autre sans glissement par l'intermédiaire d'un dispositif d'entraînement (9).

2. Dispositif de fixation selon la revendication 1, **caractérisé en ce que** le dispositif d'entraînement (9) est conformé en barre profilée creuse venant directement ou indirectement respectivement en prise par force sur le tourillon (6), en agissant en tant que manchon (10).

3. Dispositif de fixation selon la revendication 1 ou 2, **caractérisé en ce que** dans le cas d'une prise indirecte du manchon (10) sur le tourillon (6), une barre profilée (11) vient respectivement en prise depuis ceux-ci respectivement dans les extrémités ouvertes du manchon.

4. Dispositif de fixation selon l'une des revendications précédentes, **caractérisé en ce que** la liaison par force s'opère par des surfaces de pans de profilé complémentaires venant en prise l'une dans l'autre.

5. Dispositif de fixation selon l'une des revendications précédentes, **caractérisé en ce que** la liaison par force entre les tourillons (6) permet une compensation d'alignement.

6. Dispositif de fixation selon l'une des revendications précédentes, **caractérisé en ce que** pour atteindre une compensation d'alignement entre des tourillons (6) d'une paire de tourillons dans la zone de raccordement par force respective entre barres profilées (11) et tourillons (7), la zone d'extrémité des barres profilées (11) venant en prise dans les tourillons (7) est conformée en polygone de forme sphérique.

7. Dispositif de fixation selon l'une des revendications précédentes, **caractérisé en ce que** des vis de réglage (14) passant dans des alésages taraudés du composant (3) viennent en prise par force sur les coulisseaux (8), afin de pouvoir les déplacer en translation.

8. Dispositif de fixation selon l'une des revendications précédentes, **caractérisé en ce que** des contre-écrous (16) ou (17) sont prévus sur les filetages des vis de réglage (14) et/ou sur le filetage d'au moins un tourillon (6) pour bloquer ces composants de manière sûre.

9. Dispositif de fixation selon l'une des revendications précédentes, **caractérisé en ce que** la liaison par force entre une vis de réglage (14) et le coulisseau (8) correspondant est réalisée par une liaison tenon et mortaise en queue d'aronde, le tenon étant conformée en disque pour la rotation à l'intérieur de la mortaise.

10. Dispositif de fixation selon l'une des revendications précédentes, **caractérisé en ce que** la mortaise de la liaison tenon et mortaise est respectivement conformée dans le coulisseau (8) et s'étend parallèlement à l'axe d'alignement des tourillons (6) d'une paire de tourillons.

11. Dispositif de fixation selon l'une des revendications précédentes, **caractérisé en ce que** les barres profilées (11) coopérant avec les tourillons (6) d'une paire de tourillons viennent en prise l'une dans l'autre de manière télescopique.

12. Dispositif de fixation selon l'une des revendications précédentes, **caractérisé en ce que** les barres profilées (11) venant en prise dans les tourillons (6) sont fixées par des anneaux de fixation (12) dans l'espace creux-logement respectif d'un tourillon (6) pour ne pas glisser vers l'extérieur.
